# EUROPÄISCHE PATENTSCHRIFT

(11) **EP 4 073 159 B1**
(45) Veröffentlichungstag und Bekanntmachung des Hinweises auf die Patenterteilung: **16.10.2024**
(21) Anmeldenummer: 20811263.1
(22) Anmeldetag: 19.11.2020
(51) Int. Cl.: C08K 3/10, B07C 5/342

(54) **VERFAHREN ZUR HERSTELLUNG EINES MARKIERTEN POLYMERS, MARKER, VERWENDUNG DES MARKERS UND MARKIERTES POLYMER**
METHOD FOR PRODUCING A MARKED POLYMER, MARKER, USE OF THE MARKER, AND MARKED POLYMER
PROCÉDÉ DE PRODUCTION D'UN POLYMÈRE MARQUÉ, MARQUEUR, UTILISATION DU MARQUEUR ET POLYMÈRE MARQUÉ

(30) Priorität: 12.12.2019 DE 102019219469
(43) Veröffentlichungstag der Anmeldung: 19.10.2022
(73) Patentinhaber: Fraunhofer-Gesellschaft zur Förderung der angewandten Forschung e.V., 80686 München (DE)
(72) Erfinder: SCHLEGEL, Ralf, 06120 Halle (Saale) (DE); BEINER, Mario, 06120 Halle (Saale) (DE)
(74) Vertreter: Pfenning, Meinig & Partner mbB
(86) Internationale Anmeldenummer: PCT/EP2020/082638
(87) Internationale Veröffentlichungsnummer: WO 2021/115749

(56) Entgegenhaltungen:
- WO-A1-2010/066237
- CH-A5- 586 255
- CH-A5- 586 733
- DE-A1- 102017 112 370
- US-A1- 2003 021 998

## Beschreibung

Es wird ein Verfahren zur Herstellung eines markierten Polymers vorgestellt. Das Verfahren umfasst ein Mischen von Polymervorläufern mit einem Marker und Polymerisation der Polymervorläufer, wobei ein markiertes Polymer entsteht, oder, alternativ, ein Mischen eines Polymers mit einem Marker, wobei ein markiertes Polymer entsteht. Das Verfahren ist dadurch gekennzeichnet, dass der Marker Partikel enthält oder daraus besteht, die ein Metall und/oder ein Halbmetall enthalten oder daraus bestehen, wobei der Marker mindestens drei Atomarten aufweist, die eine unterschiedliche Ordnungszahl haben. Ferner wird ein Marker und ein markiertes Polymer bereitgestellt. Zudem werden Verwendungen des erfindungsgemäßen Markers vorgeschlagen. Der erfindungsgemäße Marker beeinflusst die Eigenschaften des Polymers nicht signifikant und erlaubt ein Auslesen von kodierter Information in unterschiedlichsten Polymeren auf einfache und schnelle Art und Weise und über lange Lebenszeiten des Polymers.

Die Markierung von Batches von Kunststoffen (Polymeren) stellt aufgrund der Vielzahl verfügbarerer Kunststofftypen eine große Herausforderung dar. Ausgehend vom Granulatkorn oder eines beliebigen Bauteilbereiches können praktisch keine Rückschlüsse auf die Art und den Hersteller des Werkstoffes gezogen werden. Dies ist jedoch unter den Gesichtspunkten der Werkstoff-/Produktauthentizität sowie aus Aspekten der Kreislaufwirtschaft von Kunststofferzeugnissen wesentlich.

Entscheidend für den praktischen Einsatz einer solchen Markierung sind deren Beständigkeit über die Produktlebensdauer hinweg, der einbettbare Informationsgehalt, Auslesbarkeit der Information, die Größe des Markerelementes und damit eine mögliche Wechselwirkung mit den Zieleigenschaften des Werkstoffes.

Aus der Problemstellung, d.h. dem Markieren von Kunststoffbatches, ergibt sich somit erstens das Ziel, dass die Marker langzeitbeständig sein sollten sowie dazu geeignet sein sollten, den Verarbeitungs- und Formgebungsprozess und den Nutzungszeitraum zu überdauern. Ferner sollte der im Marker abbildbare Informationsgehalt ausreichend hoch sein, um eine Vielzahl von Kunststofftypen und -batches unterscheiden zu können. Zudem sollte die über den Marker kodierte Information auch aus unterschiedlichen Kunststoffzusammensetzungen einfach und schnell auslesbar sein. Darüber hinaus sollte der Marker die Gebrauchseigenschaften des Produktes nicht nennenswert beeinflussen.

Kunststoffe werden bis heute gewöhnlich nicht markiert. Im Rahmen der zunehmenden Bedeutung der Kreislaufwirtschaft, und von Fragestellungen im Bereich Produktauthentizität, wächst jedoch der Bedarf an praxistauglichen Markierungsverfahren. Bei der Markierung von Kunststoffen wurden bisher vor allem fluoreszenzbasierte Ansätze, wie das Einbringen von organischen Fluoreszenzfarben, spezielle fluoreszierende Nanopartikel oder die Eigenfluoreszenz des Kunststoffes selbst verfolgt. Für die fluoreszenzfarbenbasierte Identifizierung werden werkstoffspezifische Abklingzeiten oder Intensitätsmaxima bei charakteristischen Wellenlängen im sichtbaren Bereich genutzt. Aufgrund der Breite der spektralen Verteilung des vom Kunststoff zurückreflektierten Fluoreszenzlichtes ist der abbildbare Informationsgehalt jedoch begrenzt. Zusätzlich ist eine Abnahme der Fluoreszenzintensität im Verlauf des Verarbeitungsprozesses und über die Lebensdauer des Erzeugnisses hinweg zu erwarten. Dies gilt insbesondere für organische Fluoreszenzmarker.

Punktuell technisch genutzt wird aktuell die Eigenfluoreszenz von Kunststoffen zum Sortieren im Bereich Abfallmanagement. Für letztere Anwendung wurden kürzlich auch Methoden der hyperspektralen Bildverarbeitung im Wellenlängenbereich von z.B. 900 - 1700 nm erwähnt, die einen Werkstoff zwar identifizieren können, wobei jedoch keine gezielte Markierung, d.h. kein "Abspeichern" definierter Informationen, realisierbar ist.

Für die Markierung von Kunststoffen gibt es erste Arbeiten, die sich mit dem Einbringen von Makromolekülen beschäftigen, deren Mikrostruktur als binär kodierte Information gezielt synthetisiert wird. Die Synthese solcher Makromoleküle und das Auslesen der Information durch Tandemmassenspektroskopie (MS/MS) ist im Stand der Technik bekannt. Hierbei werden die Makromoleküle während der Synthese des Gebrauchspolymers zugegeben bzw. als zweite Variante durch Quellung in das Polymer eingebracht. Die Extraktion aus dem Polymer und die Anreicherung der makromolekularen Marker ist bisher eine Voraussetzung für das Auslesen (Rücklesen) der Markerinformation. Innerhalb einer komplexen Polymermischung ist das Auslesen jedoch aktuell nicht möglich.

Die WO 2010/066237 A1 offenbart ein Verfahren zum Authentifizieren und/oder Identifizieren eines Gegenstands, der ein chemisches Markierungsmittel enthält, das in einem Marker als Träger im Wesentlichen untrennbar eingeschlossen ist, wobei das chemische Markierungsmittel ausgewählte chemische Elemente und/oder Verbindungen in Form von Markierungselementen enthält, die Konzentrationen basierend auf einem definierten Verschlüsselungscode aufweisen.

Die DE 10 2017 112370 A1 offenbart Polymerzusammensetzungen, die Markersubstanzen zur Kennzeichnung, Identifizierung und Authentifizierung enthalten und damit zur Kennzeichnung von Produkten aus schmelzbaren Kunststoffen eingesetzt werden können, wobei die Markersubstanzen Komplexe von 2-O-xazolinderivaten und Übergangsmetallionen oder Hauptgruppenmetallionen oder Ionen von Seltenen Erden sind und wobei die Metallionen bevorzugt Molybdän-, Indium- bzw. Gadolinium-Ionen sind.

Die CH 586 733 A5 offenbart ein Kennzeichnungsverfahren für Homo- und Copolyamide, die eine Identifizierung von Produkten erlauben, welche besagte Homo- bzw- Copolyamide enthalten, wobei den Homo- bzw. Copolyamiden hierfür Gemische aus Zink-, Blei- und Lanthanverbindungen zugesetzt werden.

Die CH 586 255 A5 offenbart ein Verfahren zur Herstellung von Homo- oder Copolyestern und daraus hergestellten Formkörpern, wobei den Homo- bzw. Copolyestern Gemische aus Blei- und Lanthanverbindungen zugesetzt werden.

Die US 2003/021998 A1 offenbart ein Polymer, das ein Markierungsmaterial umfasst, wobei das Markierungsmaterial mindestens einen organischen Fluorophor-Farbstoff, mindestens einen anorganischen Fluorophor, mindestens einen organometallischen Fluorophor, mindestens ein halbleitendes lumineszierendes Nanopartikel oder eine Kombination davon umfasst, wobei das Markierungsmaterial eine Temperaturstabilität von mindestens etwa 350 °C aufweist und in einer ausreichenden Menge vorliegt, so dass das Markierungsmaterial über ein Spektrofluorometer bei einer Anregungswellenlänge in einem Bereich zwischen etwa 100 Nanometern und etwa 1100 Nanometern nachweisbar ist.

Ausgehend hiervon war es die Aufgabe der vorliegenden Erfindung, ein Verfahren anzugeben, über das ein markiertes Polymers bereitgestellt werden kann, das die im Stand der Technik bekannten Nachteile nicht mehr aufweist. Insbesondere sollte das bereitgestellte Polymer einen Marker aufweisen, der gegenüber dem Polymerherstellungsprozess und -verarbeitungsprozess stabil ist, die Eigenschaften des Polymers nicht signifikant beeinflusst und ein Auslesen der über den Marker kodierten Information in unterschiedlichsten Polymertypen auf einfache und schnelle Art und Weise und über lange Lebenszeiten des Polymers ermöglicht. Ferner sollte ein solches markiertes Polymer bereitgestellt werden und Verwendungen hiervon vorgeschlagen werden.

Die Aufgabe wird gelöst durch das Verfahren mit den Merkmalen von Anspruch 1, den Marker mit den Merkmalen von Anspruch 6, die Verwendung des Markers mit den Merkmalen von Anspruch 10 und das markierte Polymer mit den Merkmalen von Anspruch 11. Die abhängigen Ansprüche zeigen vorteilhafte Ausführungsformen auf.

Erfindungsgemäß wird ein Verfahren zur Herstellung eines markierten Polymers bereitgestellt, umfassend die Schritte
a) Mischen von Polymervorläufern mit einem Marker und Polymerisation der Polymervorläufer, wobei ein markiertes Polymer entsteht; oder
b) Mischen eines Polymers mit einem Marker, wobei ein markiertes Polymer entsteht;
wobei der Marker Partikel enthält oder daraus besteht, die ein Metall und/oder ein Halbmetall enthalten oder daraus bestehen, wobei der Marker (beispielsweise jedes Partikel des Markers) mindestens drei Atomarten aufweist, die eine unterschiedliche Ordnungszahl haben, wobei der Marker aus Partikeln einer Partikelgröße im Bereich von 500 nm bis 1000 µm, gemessen mit einem mikroskopischen Bildgebungsverfahren, besteht, dadurch gekennzeichnet, dass der Marker dergestalt
i) geometrisch modifiziert ist, dass er
   - ein geometrisches Profil in der Oberfläche aufweist; und/oder
   - über ein Verfahren ausgewählt aus der Gruppe bestehend aus Lithographie an den Partikeln, Laserstrahlbehandlung an den Partikeln, Elektronenstrahlbehandlung an den Partikeln, Ätzverfahren und Kombinationen hiervon bearbeitet wurde; und/oder
   - ein eingeschriebenes Muster aufweist; und/oder
ii) chemisch modifiziert ist, dass er
   - über ein Verfahren ausgewählt aus der Gruppe bestehend aus kovalenter Anbindung von Molekülen an die Partikel, Dotieren, Ionenimplantation in die Partikel, Anbinden von Nanodots an die Partikel, und Kombinationen hiervon bearbeitet wurde; und/oder
   - Nanodots aufweist oder daraus besteht.

Unter Metall wird insbesondere ein elementares Metall (z.B. Cu) verstanden, wobei hierunter auch Legierungen und/oder Mischungen von elementaren Metallen verstanden werden (z.B. eine ternäre Metalllegierung). Unter Halbmetall wird insbesondere ein elementares Halbmetall (z.B. Si) verstanden, wobei hierunter auch Mischungen von elementaren Halbmetallen verstanden werden. Unter Metall bzw. Halbmetall werden somit insbesondere keine chemischen Verbindungen von Metallen bzw. Halbmetallen verstanden, beispielsweise keine Metalloxide (z.B. CuO) und keine Halbmetalloxide (z.B. SiO₂). Dennoch kann beispielsweise mindestens eine Keramik ein weiterer Bestandteil des Markers sein.

Über das erfindungsgemäße Verfahren kann ein markiertes Polymer bereitgestellt werden, das einen verarbeitungsstabilen Marker enthält, der die Eigenschaften des Polymers nicht signifikant beeinflusst und der ein Auslesen von kodierter Information in unterschiedlichsten Polymeren auf einfache und schnelle Art und Weise und über lange Lebenszeiten des Polymers ermöglicht. Kunststoffbatches können damit erstmalig ab der Herstellung mit relativ großer Variationsvielfalt, d.h. mit einem hohen Informationsgehalt, markiert werden. Das bereitgestellte markierte Polymer erlaubt eine stabile Rückführbarkeit des Polymers auf das Ausgangsmaterial und auch auf den Hersteller.

Im Gegensatz zu den im Stand der Technik verwendeten fluoreszenzbasierten Markern kann eine höhere Anzahl von Informationsbits genutzt werden, die sich zudem nicht überlagern. Zudem tritt im Gegensatz zu den im Stand der Technik verwendeten, fluoreszenzbasierten Markern kein sog. "photobleaching" auf, was die Langzeitstabilität der im Marker kodierten Information wesentlich erhöht. Es erfolgt zudem keine thermische Zersetzung der Marker, die sonst bei fluoreszenzbasierten Markern aus dem Stand der Technik bei höheren Verarbeitungstemperaturen beobachtet wird. Auch dieser Umstand verlängert die Langzeitstabilität der im Marker kodierten Information deutlich gegenüber bekannten markierten Polymeren aus dem Stand der Technik.

Das erfindungsgemäße Verfahren kann dadurch gekennzeichnet sein, dass der Marker ein Metall enthält oder daraus besteht, bevorzugt ein Gemisch verschiedener Metalle und/oder eine Metalllegierung enthält oder daraus besteht, bevorzugt eine Metalllegierung enthält oder daraus besteht. Der Vorteil hierbei ist, dass sich Metallatome leicht über Röntgenfluoreszenzanalyse detektieren lassen. Die im Marker kodierte Information kann somit schnell und einfach ausgelesen werden.

Ferner kann der Marker ein Halbmetall enthalten oder daraus bestehen. Halbmetalle (z.B. Silizium) als Markerbestandteil haben den Vorteil, dass sie sich einfach geometrisch (z.B. Einschreiben eines Barcodes über Lithographie) und/oder chemisch (z.B. Dotierung) modifizieren lassen, was den im Marker kodierten Informationsgehalt auf einfache Art und Weise vergrößern lässt.

Abgesehen davon kann der Marker zusätzlich eine Keramik enthalten. Keramiken als Markerbestandteil haben den Vorteil, dass sie auch gegenüber hohen Temperaturen beständig sind und eine hohe Härte aufweisen. Folglich erlauben diese Markerbestandteile eine hohe Langzeitstabilität auch bei harschen Bearbeitungsbedingungen der Polymere.

In einer bevorzugten Ausführungsform ist der Marker zur Detektion mittels Röntgenfluoreszenz geeignet. Die Röntgenfluoreszenz ist eine spurenanalytische Methode, welche eine hohe Empfindlichkeit für metallhaltige Füllstoffe in organischen Polymeren aufweist. Die Nachweisgrenze der Röntgenfluoreszenz liegt bei etwa einem ppm. Zudem kann über die Röntgenfluoreszenz die Information des Markers schnell und einfach ausgelesen werden.

In einer bevorzugten Ausführungsform weist der Marker keine Atomarten auf, die von einem Katalysator stammen, der zur Katalyse der Polymerisation in Schritt a) eingesetzt wird und/oder in dem Polymer aus Schritt b) enthalten ist. Der Vorteil hierbei ist, dass die im Marker kodierte Information unabhängig vom Herstellungsverfahren der Polymere ist und die Information nicht durch eine unbekannte Fremdinformation überlagert wird. Dies erleichtert ein korrektes Zuordnen der ausgelesenen Markerinformation zu einem bestimmten Polymer.

In einer weiteren bevorzugten Ausführungsform weist der Marker keine Atomarten auf, die von einer Wandung eines Behälters und/oder einer Verarbeitungsmaschine stammen, der bei der Polymerisation in Schritt a) eingesetzt wird und/oder bei einer Herstellung des Polymers aus Schritt b) eingesetzt wurde. Der Vorteil hierbei ist, dass die im Marker kodierte Information unabhängig vom Herstellungsverfahren der Polymere ist und die Information nicht durch eine unbekannte Fremdinformation überlagert wird. Dies erleichtert ein korrektes Zuordnen der ausgelesenen Markerinformation zu einem bestimmten Polymer.

Erfindungsgemäß ist der Marker dergestalt geometrisch modifiziert, dass er ein geometrisches Profil in der Oberfläche aufweist, über ein Verfahren ausgewählt aus der Gruppe bestehend aus Lithographie, Laserstrahlbehandlung, Elektronenstrahlbehandlung, Ätzverfahren und Kombinationen hiervon bearbeitet worden ist, und/oder ein eingeschriebenes Muster aufweist, wobei der Marker bevorzugt einen eingravierten und/oder lithographisch erzeugten Code aufweist, besonders bevorzugt einen eingravierten und/oder lithographisch erzeugten Barcode und/oder Punktcode aufweist. Die zusätzliche geometrische Modifikation des Markers hat den Vorteil, dass zusätzliche Kodierungsebenen eingeführt werden und der Informationsgehalt des Markers dadurch vergrößert wird. Beispielsweise können über die geometrische Modifizierung der Hersteller, Indexwerte, Batch-Nummern, das Herstellungsjahr oder Herstellungsdatum des Polymers kodiert werden.

Erfindungsgemäß ist der Marker alternativ oder zusätzlich zur genannten geometrischen Modifizierung dergestalt chemisch modifiziert, dass er über ein Verfahren ausgewählt aus der Gruppe bestehend aus kovalenter Anbindung von Molekülen an die Partikel, Dotieren, Ionenimplantation in die Partikel, Anbinden von Nanodots an die Partikel, und Kombinationen hiervon bearbeitet worden ist, Nanodots aufweist oder daraus besteht, optional Nanodots, die chemisch kovalent an die Partikel gebunden sind, aufweist. Die chemische Modifikation des Markers hat den Vorteil, dass zusätzliche Kodierungsebenen eingeführt werden und der Informationsgehalt des Markers dadurch vergrößert wird. Beispielsweise können über die geometrische Modifizierung der Hersteller, Indexwerte, Batch-Nummern oder das Herstellungsjahr oder Herstellungsdatum des Polymers kodiert werden.

Der Marker kann in dem Verfahren in einer Menge zugemischt werden, dass das markierte Polymer 1 ppm bis 1000 ppm Marker, bevorzugt 2 bis 900 ppm Marker, besonders bevorzugt 5 bis 800 ppm Marker, besonders bevorzugt 10 bis 700 ppm Marker, ganz besonders bevorzugt 20 bis 600 ppm Marker, insbesondere 50 bis 500 ppm Marker, in Bezug auf die Gesamtmenge des markierten Polymers, aufweist. Eine Zugabe des Markers in einer größeren Menge kann vorteilhaft sein, um das Signal des Markers gegenüber Atomarten abzuheben, die zwangsweise durch das Herstellungsverfahren des Polymers in das Polymer gelangt sind. Ein korrektes Zuordnen der ausgelesenen Markerinformation zu einem bestimmten Polymer wird somit erleichtert.

Erfindungsgemäß besteht der in dem Verfahren eingesetzte Marker aus Partikeln mit einer Partikelgröße im Bereich von 1 nm bis 1000 µm, bevorzugt 500 nm bis 10 µm, besonders bevorzugt 0,1 um bis 5 µm, insbesondere 1 um bis 5 µm, gemessen mit einem mikroskopischen Bildgebungsverfahren. Größere Partikel haben den Vorteil, dass sie, beispielsweise nach einer geometrischen und/oder chemischen Modifizierung einen höheren Informationsgehalt speichern können. Zudem erlauben größere Partikel, einen Unterschied zu Bestandteilen des Polymers, die über das Herstellungsverfahren in das Polymer gelangt sind (z.B. Katalysatorsalze und/oder Katalysatorkomplexe), zu bestimmen. Dies erleichtert ein korrektes Zuordnen der ausgelesenen Markerinformation zu einem bestimmten Polymer.

Erfindungsgemäß wird ferner ein Marker bereitgestellt, der Partikel enthält oder daraus besteht, wobei die Partikel ein Metall und/oder ein Halbmetall enthalten oder daraus bestehen, wobei der Marker (beispielsweise jedes Partikel des Markers) mindestens drei Atomarten aufweist, die eine unterschiedliche Ordnungszahl haben, wobei der Marker aus Partikeln einer Partikelgröße im Bereich von 500 nm bis 1000 µm, gemessen mit einem mikroskopischen Bildgebungsverfahren, besteht, und der Marker dadurch gekennzeichnet ist, dass er dergestalt
i) geometrisch modifiziert ist, dass er
   - ein geometrisches Profil in der Oberfläche aufweist; und/oder
   - über ein Verfahren ausgewählt aus der Gruppe bestehend aus Lithographie an den Partikeln, Laserstrahlbehandlung an den Partikeln, Elektronenstrahlbehandlung an den Partikeln, Ätzverfahren und Kombinationen hiervon bearbeitet wurde; und/oder
   - ein eingeschriebenes Muster aufweist; und/oder
ii) chemisch modifiziert ist, dass er
   - über ein Verfahren ausgewählt aus der Gruppe bestehend aus kovalenter Anbindung von Molekülen an die Partikel, Dotieren, Ionenimplantation in die Partikel, Anbinden von Nanodots an die Partikel, und Kombinationen hiervon bearbeitet wurde; und/oder
   - Nanodots aufweist oder daraus besteht.

Der Marker kann dadurch gekennzeichnet sein, dass er ein Gemisch verschiedener Metalle und/oder eine Metalllegierung enthält oder daraus besteht, bevorzugt eine Metalllegierung enthält oder daraus besteht.

Ferner kann der Marker dadurch gekennzeichnet sein, dass er ein Halbmetall enthält oder daraus besteht.

Zudem kann der Marker dadurch gekennzeichnet sein, dass er ferner eine Keramik enthält.

Darüber hinaus kann der Marker zur Detektion mittels Röntgenfluoreszenz geeignet sein.

In einer bevorzugten Ausgestaltungsform weist der Marker keine Atomarten auf, die von einem Katalysator stammen, der zur Katalyse einer Polymerisation eines Polymers eingesetzt wird und/oder in einem Polymer enthalten ist.

In einer weiteren bevorzugten Ausgestaltungsform weist der Marker keine Atomarten auf, die von einer Behälterwand eines Behälters stammen, der bei einer Herstellung eines Polymers eingesetzt wird.

Erfindungsgemäß ist der Marker dergestalt geometrisch modifiziert, dass er ein geometrisches Profil in der Oberfläche aufweist, über ein Verfahren ausgewählt aus der Gruppe bestehend aus Lithographie an den Partikeln, Laserstrahlbehandlung an den Partikeln, Elektronenstrahlbehandlung an den Partikeln, Ätzverfahren und Kombinationen hiervon bearbeitet worden ist, und/oder ein eingeschriebenes Muster aufweist, wobei der Marker bevorzugt einen eingravierten und/oder lithographisch erzeugten Code aufweist, besonders bevorzugt einen eingravierten und/oder lithographisch erzeugten Barcode und/oder Punktcode aufweist.

Erfindungsgemäß ist der Marker alternativ oder zusätzlich zur geometrischen Modifizierung dergestalt chemisch modifiziert, dass er über ein Verfahren ausgewählt aus der Gruppe bestehend aus kovalenter Anbindung von Molekülen an die Partikel, Dotieren, Ionenimplantation in die Partikel, Anbinden von Nanodots an die Partikel, und Kombinationen hiervon bearbeitet worden ist, Nanodots aufweist oder daraus besteht, optional Nanodots, die chemisch kovalent an die Partikel gebunden sind, aufweist.

Der erfindungsgemäße ist dadurch gekennzeichnet, dass er aus Partikeln mit einer Partikelgröße im Bereich von 1 nm bis 1000 µm, bevorzugt 500 nm bis 10 µm, besonders bevorzugt 0,1 µm bis 5 µm, insbesondere 1 µm bis 5 µm, gemessen mit einem mikroskopischen Bildgebungsverfahren besteht.

Es wird die Verwendung des erfindungsgemäßen Markers zur Identifikation eines Polymers (d.h. eines mit dem Marker versetzten Polymers) vorgeschlagen, wobei die Identifikation bevorzugt über Röntgenfluoreszenz und/oder ein mikroskopisches Verfahren erfolgt. Insbesondere wird die Identifikation des Polymers dazu verwendet, das Polymer einem bestimmten Hersteller zuzuordnen, bevorzugt einer bestimmten Charge eines bestimmten Herstellers zuzuordnen. Die Identifikation des Polymers kann auch dazu verwendet werden, das Polymer im Rahmen eines Polymerrecyclings zu identifizieren. Ferner kann die Identifikation des Polymers dazu verwendet werden, das Polymer im Rahmen eines Polymerrecyclings von anderen Polymeren zu trennen. Darüber hinaus kann die Identifikation des Polymers dazu verwendet werden, die Historie des Polymers zu dokumentieren.

Erfindungsgemäß wird zudem ein markiertes Polymer bereitgestellt, das einen Marker enthält, wobei der Marker Partikel enthält oder daraus besteht, die ein Metall und/oder ein Halbmetall enthalten oder daraus bestehen, wobei der Marker (beispielsweise jedes Partikel des Markers) mindestens drei Atomarten aufweist, die eine unterschiedliche Ordnungszahl haben, wobei der Marker aus Partikeln einer Partikelgröße im Bereich von 500 nm bis 1000 µm, gemessen mit einem mikroskopischen Bildgebungsverfahren, besteht, dadurch gekennzeichnet, dass der Marker dergestalt
i) geometrisch modifiziert ist, dass er
   - ein geometrisches Profil in der Oberfläche aufweist; und/oder
   - über ein Verfahren ausgewählt aus der Gruppe bestehend aus Lithographie an den Partikeln, Laserstrahlbehandlung an den Partikeln, Elektronenstrahlbehandlung an den Partikeln, Ätzverfahren und Kombinationen hiervon bearbeitet wurde; und/oder
   - ein eingeschriebenes Muster aufweist; und/oder
ii) chemisch modifiziert ist, dass er
   - über ein Verfahren ausgewählt aus der Gruppe bestehend aus kovalenter Anbindung von Molekülen an die Partikel, Dotieren, Ionenimplantation in die Partikel, Anbinden von Nanodots an die Partikel, und Kombinationen hiervon bearbeitet wurde; und/oder
   - Nanodots aufweist oder daraus besteht.

Das markierte Polymer kann dadurch gekennzeichnet sein, dass es über das erfindungsgemäße Verfahren herstellbar ist. Folglich kann das markierte Polymer alle Merkmale aufweisen, die zwangsweise über die Durchführung des erfindungsgemäßen Verfahrens zu dessen Herstellung in dem markierten Polymer vorliegen.

Anhand der nachfolgenden Beispiele soll der erfindungsgemäße Gegenstand näher erläutert werden.

Beispiel 1 zeigt keine Ausführungsform im Sinne der Erfindung, ist aber hilfreich, um bestimmte Aspekte davon zu verstehen.

### Beispiel 1 - Herstellung eines mit Metalllegierungspartikeln markierten Polymers

Den verschiedenen Polymeren PA6, PA66, PET und iPP wird jeweils im ppm-Maßstab jeweils ein anderes Pulver einer Metalllegierung zugemischt, wobei jedes Pulver eine Metalllegierung mit drei verschiedenen Metallatomen aufweist, d.h. eine ternäre Metalllegierung aufweist. Das Einmischen des Pulvers kann z.B. im Verlauf der Synthese der verschiedenen Polymere in der Lösung oder im Verlauf des Extrusionsprozesses der verschiedenen Polymere bei der Granulatherstellung erfolgen.

Die verschiedenen Polymere können somit eindeutig über Röntgenfluoreszenzanalyse identifiziert werden, da jedes der verschiedenen Polymere ein eindeutig identifizierbares Röntgenfluoreszenzspektrum aufweist.

### Beispiel 2 - Herstellung eines mit Halbmetallpartikeln markierten Polymers

Als erster Schritt wird in einen Siliziumwafer eine binäre Information (z.B. ein Barcode) eingeschrieben (z.B. über Lithographie, einen Laserstrahl und/oder einen Elektronenstrahl), welche mikroskopisch ausgelesen werden kann. Ferner kann der Siliziumwafer optional auch chemisch modifiziert werden (z.B. über Dotierung), um eine weitere Information in dem Siliziumwafer zu kodieren.

Der Siliziumwafer ist in diesem Beispiel rückseitig mit einer Schicht aus einer Metalllegierung beschichtet, die eine zusätzliche Information kodiert, beispielsweise eine Zuordnung einer bestimmten Polymerart oder ein Hinweis, , dass der Marker im Polymer eine Zusatzinformation aufweist, die in diesem Fall in dem Siliziumbestandteil des Markers kodiert ist.

Die Siliziumwafer werden anschließend, z.B. durch Mahlverfahren, in einen partikulären Marker (Markerpulver) überführt. In diesem Fall weisen die Partikel nicht nur die Metalllegierung, sondern auch einen Siliziumbestandteil auf, der den Barcode enthält.

Über Röntgenfluoreszenzanalyse kann ein schnelles Auslesen der metallischen und Halbmetallischen Komponenten des Markers erfolgen. Über ein weiteres Verfahren (z.B. ein mikroskopisches Verfahren) kann zudem der Barcode des Siliziumbestandteils des Markers ausgelesen werden.

## Patentansprüche

1. Verfahren zur Herstellung eines markierten Polymers, umfassend die Schritte
a) Mischen von Polymervorläufern mit einem Marker und Polymerisation der Polymervorläufer, wobei ein markiertes Polymer entsteht; oder
b) Mischen eines Polymers mit einem Marker, wobei ein markiertes Polymer entsteht;
wobei der Marker Partikel enthält oder daraus besteht, die ein Metall und/oder ein Halbmetall enthalten oder daraus bestehen, wobei der Marker mindestens drei Atomarten aufweist, die eine unterschiedliche Ordnungszahl haben,
wobei der Marker aus Partikeln einer Partikelgröße im Bereich von 500 nm bis 1000 µm, gemessen mit einem mikroskopischen Bildgebungsverfahren, besteht,
**dadurch gekennzeichnet, dass** der Marker dergestalt
i) geometrisch modifiziert ist, dass er
- ein geometrisches Profil in der Oberfläche aufweist; und/oder
- über ein Verfahren ausgewählt aus der Gruppe bestehend aus Lithographie an den Partikeln, Laserstrahlbehandlung an den Partikeln, Elektronenstrahlbehandlung an den Partikeln, Ätzverfahren und Kombinationen hiervon bearbeitet wurde; und/oder
- ein eingeschriebenes Muster aufweist; und/oder
ii) chemisch modifiziert ist, dass er
- über ein Verfahren ausgewählt aus der Gruppe bestehend aus kovalenter Anbindung von Molekülen an die Partikel, Dotieren, Ionenimplantation in die Partikel, Anbinden von Nanodots an die Partikel, und Kombinationen hiervon bearbeitet wurde; und/oder
- Nanodots aufweist oder daraus besteht.

2. Verfahren gemäß dem vorhergehenden Anspruch, **dadurch gekennzeichnet, dass** der Marker
i) ein Metall enthält oder daraus besteht, bevorzugt ein Gemisch verschiedener Metalle und/oder eine Metalllegierung enthält oder daraus besteht, bevorzugt eine Metalllegierung enthält oder daraus besteht; und/oder
ii) ein Halbmetall enthält oder daraus besteht; und/oder
iii) eine Keramik enthält; und/oder
iv) zur Detektion mittels Röntgenfluoreszenz geeignet ist.

3. Verfahren gemäß dem einem der vorhergehenden Ansprüche, **dadurch gekennzeichnet, dass** der Marker keine Atomarten aufweist, die von einem Katalysator stammen, der zur Katalyse der Polymerisation in Schritt a) eingesetzt wird und/oder in dem Polymer aus Schritt b) enthalten ist.

4. Verfahren gemäß einem der vorhergehenden Ansprüche, **dadurch gekennzeichnet, dass** der Marker keine Atomarten aufweist, die von einer Wandung eines Behälters und/oder einer Verarbeitungsmaschine stammen, der bei der Polymerisation in Schritt a) eingesetzt wird und/oder bei einer Herstellung des Polymers aus Schritt b) eingesetzt wurde.

5. Verfahren gemäß einem der vorhergehenden Ansprüche, **dadurch gekennzeichnet, dass** der Marker in einer Menge zugemischt wird, dass das markierte Polymer 1 ppm bis 1000 ppm Marker, bevorzugt 2 bis 900 ppm Marker, besonders bevorzugt 5 bis 800 ppm Marker, besonders bevorzugt 10 bis 700 ppm Marker, ganz besonders bevorzugt 20 bis 600 ppm Marker, insbesondere 50 bis 500 ppm Marker, in Bezug auf die Gesamtmenge des markierten Polymers, aufweist.

6. Marker, der Partikel enthält oder daraus besteht, wobei die Partikel ein Metall und/oder ein Halbmetall enthalten oder daraus bestehen, wobei der Marker mindestens drei Atomarten aufweist, die eine unterschiedliche Ordnungszahl haben,
wobei der Marker aus Partikeln einer Partikelgröße im Bereich von 500 nm bis 1000 µm, gemessen mit einem mikroskopischen Bildgebungsverfahren, besteht,
**dadurch gekennzeichnet, dass** der Marker dergestalt
i) geometrisch modifiziert ist, dass er
- ein geometrisches Profil in der Oberfläche aufweist; und/oder
- über ein Verfahren ausgewählt aus der Gruppe bestehend aus Lithographie an den Partikeln, Laserstrahlbehandlung an den Partikeln, Elektronenstrahlbehandlung an den Partikeln, Ätzverfahren und Kombinationen hiervon bearbeitet wurde; und/oder
- ein eingeschriebenes Muster aufweist; und/oder
ii) chemisch modifiziert ist, dass er
- über ein Verfahren ausgewählt aus der Gruppe bestehend aus kovalenter Anbindung von Molekülen an die Partikel, Dotieren, Ionenimplantation in die Partikel, Anbinden von Nanodots an die Partikel, und Kombinationen hiervon bearbeitet wurde; und/oder
- Nanodots aufweist oder daraus besteht.

7. Marker gemäß Anspruch 6, **dadurch gekennzeichnet**, der Marker
i) ein Gemisch verschiedener Metalle und/oder eine Metalllegierung enthält oder daraus besteht, bevorzugt eine Metalllegierung enthält oder daraus besteht; und/oder
ii) ein Halbmetall enthält oder daraus besteht; und/oder
iii) eine Keramik enthält; und/oder
iv) zur Detektion mittels Röntgenfluoreszenz geeignet ist.

8. Marker gemäß einem der Ansprüche 6 oder 7, **dadurch gekennzeichnet, dass** der Marker keine Atomarten aufweist, die von einem Katalysator stammen, der zur Katalyse einer Polymerisation eines Polymers eingesetzt wird und/oder in einem Polymer enthalten ist.

9. Marker gemäß einem der Ansprüche 6 bis 8, **dadurch gekennzeichnet, dass** der Marker keine Atomarten aufweist, die von einer Behälterwand eines Behälters stammen, der bei einer Herstellung eines Polymers eingesetzt wird.

10. Verwendung eines Markers gemäß einem der Ansprüche 6 bis 9 zur Identifikation eines Polymers, bevorzugt über ein Verfahren ausgewählt aus der Gruppe bestehend aus Röntgenfluoreszenz, mikroskopisches Verfahren, spektroskopisches Verfahren und Kombinationen hiervon, wobei die Identifikation des Polymers insbesondere dazu verwendet wird
i) das Polymer einem bestimmten Hersteller zuzuordnen, bevorzugt einer bestimmten Charge eines bestimmten Herstellers zuzuordnen; und/oder
ii) das Polymer im Rahmen eines Polymerrecyclings zu identifizieren; und/oder
iii) das Polymer im Rahmen eines Polymerrecyclings von anderen Polymeren zu trennen; und/oder
iv) die Historie des Polymers zu dokumentieren.

11. Markiertes Polymer, das mindestens einen Marker enthält, wobei der Marker Partikel enthält oder daraus besteht, die ein Metall und/oder ein Halbmetall enthalten oder daraus bestehen, wobei der Marker mindestens drei Atomarten aufweist, die eine unterschiedliche Ordnungszahl haben,
wobei der Marker aus Partikeln einer Partikelgröße im Bereich von 500 nm bis 1000 µm, gemessen mit einem mikroskopischen Bildgebungsverfahren, besteht,
**dadurch gekennzeichnet, dass** der Marker dergestalt
i) geometrisch modifiziert ist, dass er
- ein geometrisches Profil in der Oberfläche aufweist; und/oder
- über ein Verfahren ausgewählt aus der Gruppe bestehend aus Lithographie an den Partikeln, Laserstrahlbehandlung an den Partikeln, Elektronenstrahlbehandlung an den Partikeln, Ätzverfahren und Kombinationen hiervon bearbeitet wurde; und/oder
- ein eingeschriebenes Muster aufweist; und/oder
ii) chemisch modifiziert ist, dass er
- über ein Verfahren ausgewählt aus der Gruppe bestehend aus kovalenter Anbindung von Molekülen an die Partikel, Dotieren, Ionenimplantation in die Partikel, Anbinden von Nanodots an die Partikel, und Kombinationen hiervon bearbeitet wurde; und/oder
- Nanodots aufweist oder daraus besteht.

12. Markiertes Polymer gemäß Anspruch 11, **dadurch gekennzeichnet, dass** das markierte Polymer über ein Verfahren gemäß einem der Ansprüche 1 bis 5 herstellbar ist.

## Claims

1. A method for producing a marked polymer, comprising the steps:
a) mixing polymer precursors with a marker and polymerizing the polymer precursors, resulting in a marked polymer; or
b) mixing a polymer with a marker, resulting in a marked polymer;
wherein the marker comprises or consists of particles which comprise or consist of a metal and/or a semi-metal, the marker having at least three atomic species with a different atomic number,
wherein the marker consists of particles with a particle size in the range of 500 nm to 1000 µm, measured by a microscopic imaging method,
**characterized in that** the marker is
i) geometrically modified such that it
- has a geometric profile in the surface; and/or
- has been processed by a method selected from the group consisting of lithography on the particles, laser beam treatment on the particles, electron beam treatment on the particles, etching and combinations thereof; and/or
- has an inscribed pattern; and/or
ii) is chemically modified, such that it
- has been processed by a method selected from the group consisting of the covalent attachment of molecules to the particles, doping, ion implantation into the particles, attachment of nanodots to the particles and combinations thereof; and/or
- comprises or consists of nanodots.

2. The method according to the preceding claim, **characterized in that** the marker
i) comprises or consists of a metal, preferably comprises or consists of a mixture of different metals and/or a metal alloy, preferably comprises or consists of a metal alloy; and/or
ii) comprises or consists of a semi-metal; and/or
iii) comprises a ceramic; and/or
iv) is suitable for detection by means of X-ray fluorescence.

3. The method according to any one of the preceding claims, **characterized in that** the marker does not comprise atomic species which originate from a catalyst which is used to catalyze the polymerization in step a) and/or is contained in the polymer from step b).

4. The method according to any one of the preceding claims, **characterized in that** the marker does not comprise atomic species which originate from a wall of a container and/or a processing machine, which is used in the polymerization in step a) and/or has been used in the production of the polymer from step b).

5. The method according to any one of the preceding claims, **characterized in that** the marker is admixed in an amount such that the marked polymer comprises 1 ppm to 1000 ppm marker, preferably 2 to 900 ppm marker, particularly preferably 5 to 800 ppm marker, particularly preferably 10 to 700 ppm marker, most particularly preferably 20 to 600 ppm marker, in particular 50 to 500 ppm marker, with respect to the total amount of the marked polymer.

6. A marker, which comprises or consists of particles, wherein the particles comprise or consist of a metal and/or a semi-metal, wherein the marker comprises at least three atomic species which have a different atomic number,
wherein the marker consists of particles with a particle size in the range of 500 nm to 1000 µm, measured by a microscopic imaging method,
**characterized in that** the marker is
i) geometrically modified such that it
- has a geometric profile in the surface; and/or - has been processed by a method selected from the group consisting of lithography on the particles, laser beam treatment on the particles, electron beam treatment on the particles, etching and combinations thereof; and/or
- has an inscribed pattern; and/or
ii) is chemically modified, such that it
- has been processed by a method selected from the group consisting of the covalent attachment of molecules to the particles, doping, ion implantation into the particles, attachment of nanodots to the particles and combinations thereof; and/or
- comprises or consists of nanodots.

7. The marker according to claim 6, **characterized in that** the marker
i) comprises or consists of a mixture of different metals and/or a metal alloy, preferably comprises or consists of a metal alloy; and/or
ii) comprises or consists of a semi-metal; and/or
iii) comprises a ceramic; and/or
iv) is suitable for detection by means of X-ray fluorescence.

8. The marker according to any one of the claims 6 or 7, **characterized in that** the marker does not comprise any atomic species originating from a catalyst used to catalyze a polymerization of a polymer and/or contained in a polymer.

9. The marker according to any one of the claims 6 to 8, **characterized in that** the marker does not comprise any atomic species originating from a container wall of a container used in the production of a polymer.

10. Use of a marker according to any one of the claims 6 to 9 for identifying a polymer, preferably via a method selected from the group consisting of X-ray fluorescence, microscopic method, spectroscopic method and combinations thereof, wherein the identification of the polymer is used in particular
i) to assign the polymer to a specific manufacturer, preferably a specific batch of a specific manufacturer; and/or
ii) to identify the polymer in the course of polymer recycling; and/or
iii) to separate the polymer from other polymers in the course of polymer recycling; and/or
iv) to document the history of the polymer.

11. A marked polymer, which comprises at least one marker, wherein the marker comprises or consists of particles which comprise or consist of a metal and/or a semi-metal, wherein the marker comprises at least three atomic species having a different atomic number,
wherein the marker consists of particles with a particle size in the range of 500 nm to 1000 µm, measured by a microscopic imaging method,
**characterized in that** the marker is
i) geometrically modified such that it
- has a geometric profile in the surface; and/or
- has been processed via a method selected from the group consisting of lithography on the particles, laser beam treatment on the particles, electron beam treatment on the particles, etching methods, and combinations thereof; and/or
- has an inscribed pattern; and/or
ii) is chemically modified, such that it
- has been processed by a method selected from the group consisting of the covalent attachment of molecules to the particles, doping, ion implantation into the particles, attachment of nanodots to the particles and combinations thereof; and/or
- comprises or consists of nanodots.

12. The marked polymer according to claim 11, **characterized in that** the marked polymer can be produced by a method according to any one of the claims 1 to 5.

## Revendications

1. Procédé de fabrication d'un polymère marqué, comprenant les étapes consistant à :
a) mélanger des précurseurs de polymère avec un marqueur et polymériser les précurseurs de polymère pour obtenir un polymère marqué ; ou
b) mélanger un polymère avec un marqueur pour obtenir un polymère marqué ;
le marqueur contenant ou consistant en des particules qui contiennent ou consistent en un métal et/ou un semi-métal, le marqueur présentant au moins trois types d'atome ayant un numéro atomique différent,
dans lequel le marqueur est constitué de particules d'une taille comprise entre 500 nm et 1000 µm, mesurée par un procédé d'imagerie microscopique,
**caractérisé en ce que** le marqueur
i) est modifié géométriquement de manière à ce qu'il
- présente un profil géométrique en surface ; et/ou
- a été usiné par un procédé choisi dans le groupe constitué par une lithographie sur les particules, un traitement par faisceau laser sur les particules, un traitement par faisceau d'électrons sur les particules, les procédés de gravure et des combinaisons de ceux-ci ; et/ou
- présente un motif inscrit ; et/ou
ii) est modifié chimiquement de manière à ce qu'il
- ait été traité par un procédé choisi dans le groupe constitué par une liaison covalente de molécules aux particules, un dopage, une implantation ionique dans les particules, une liaison de nanodots aux particules et des combinaisons de ceux-ci ; et/ou
- présente des nanodots ou consiste en des nanodots.

2. Procédé selon la revendication précédente, **caractérisé en ce que** le marqueur
i) contient ou est constitué d'un métal, de préférence contient ou est constitué d'un mélange de différents métaux et/ou d'un alliage métallique, de préférence contient ou est constitué d'un alliage métallique ; et/ou
ii) contient ou est constitué d'un semi-métal ; et/ou
iii) contient une céramique ; et/ou
iv) est adapté à une détection par fluorescence radiographique.

3. Procédé selon l'une quelconque des revendications précédentes, **caractérisé en ce que** le marqueur ne présente aucune espèce atomique issue d'un catalyseur utilisé pour catalyser la polymérisation à l'étape a) et/ou contenu dans le polymère de l'étape b).

4. Procédé selon l'une quelconque des revendications précédentes, **caractérisé en ce que** le marqueur ne présente aucune espèce atomique issue d'une paroi d'un récipient et/ou d'une machine de traitement utilisé dans la polymérisation de l'étape a) et/ou utilisé dans une fabrication du polymère de l'étape b).

5. Procédé selon l'une quelconque des revendications précédentes, **caractérisé en ce que** le marqueur est mélangé en une quantité telle que le polymère marqué présente 1 ppm à 1000 ppm de marqueur, de préférence 2 à 900 ppm de marqueur, de manière particulièrement préférée 5 à 800 ppm de marqueur, de manière particulièrement préférée 10 à 700 ppm de marqueur, de manière encore plus préférée 20 à 600 ppm de marqueur, en particulier 50 à 500 ppm de marqueur, par rapport à la quantité totale du polymère marqué.

6. Marqueur contenant ou consistant en des particules, les particules contenant ou consistant en un métal et/ou un semi-métal, le marqueur présentant au moins trois types d'atome ayant un numéro atomique différent,
dans lequel le marqueur est constitué de particules d'une taille comprise entre 500 nm et 1000 µm, mesurée par un procédé d'imagerie microscopique,
**caractérisé en ce que** le marqueur
i) est modifié géométriquement de manière à ce qu'il
- présente un profil géométrique en surface ; et/ou a été usiné par un procédé choisi dans le groupe constitué par une lithographie sur les particules, un traitement par faisceau laser sur les particules, un traitement par faisceau d'électrons sur les particules, les procédés de gravure et des combinaisons de ceux-ci ; et/ou
- présente un motif inscrit ; et/ou
ii) est modifié chimiquement de manière à ce qu'il
- ait été traité par un procédé choisi dans le groupe constitué par une liaison covalente de molécules aux particules, un dopage, une implantation ionique dans les particules, une liaison de nanodots aux particules et des combinaisons de ceux-ci ; et/ou
- présente des nanodots ou consiste en des nanodots.

7. Marqueur selon la revendication 6, **caractérisé en ce que** le marqueur
i) contient ou est constitué d'un mélange de différents métaux et/ou d'un alliage métallique, de préférence contient ou est constitué d'un alliage métallique ; et/ou
ii) contient ou est constitué d'un semi-métal ; et/ou
iii) contient une céramique ; et/ou
iv) est adapté à une détection par fluorescence radiographique.

8. Marqueur selon l'une quelconque des revendications 6 ou 7, **caractérisé en ce que** le marqueur ne présente aucune espèce atomique issue d'un catalyseur utilisé pour catalyser une polymérisation d'un polymère et/ou contenu dans un polymère.

9. Marqueur selon l'une quelconque des revendications 6 à 8, **caractérisé en ce que** le marqueur ne comporte aucune espèce atomique issue d'une paroi de contenant d'un contenant utilisé dans la fabrication d'un polymère.

10. Utilisation d'un marqueur selon l'une quelconque des revendications 6 à 9 pour l'identification d'un polymère, de préférence par un procédé choisi dans le groupe constitué par la fluorescence X, un procédé microscopique, un procédé spectroscopique et des combinaisons de ceux-ci, l'identification du polymère étant notamment utilisée pour
i) associer le polymère à un fabricant spécifique, de préférence à un lot spécifique d'un fabricant spécifique ; et/ou
ii) identifier le polymère dans le cadre d'un recyclage de polymère ; et/ou
iii) séparer le polymère d'autres polymères dans le cadre d'un recyclage de polymère ; et/ou
iv) documenter l'historique du polymère.

11. Polymère marqué contenant au moins un marqueur, le marqueur contenant ou consistant en des particules contenant ou consistant en un métal et/ou un semi-métal, le marqueur présentant au moins trois types d'atome ayant un numéro atomique différent,
dans lequel le marqueur est constitué de particules d'une taille comprise entre 500 nm et 1000 µm, mesurée par un procédé d'imagerie microscopique,
**caractérisé en ce que** le marqueur
i) est modifié géométriquement de manière à ce qu'il
- présente un profil géométrique en surface ; et/ou
- a été usiné par un procédé choisi dans le groupe constitué par une lithographie sur les particules, un traitement par faisceau laser sur les particules, un traitement par faisceau d'électrons sur les particules, les procédés de gravure et des combinaisons de ceux-ci ; et/ou
- présente un motif inscrit ; et/ou
ii) est modifié chimiquement de manière à ce qu'il
- ait été traité par un procédé choisi dans le groupe constitué par une liaison covalente de molécules aux particules, un dopage, une implantation ionique dans les particules, une liaison de nanodots aux particules et des combinaisons de ceux-ci ; et/ou
- présente des nanodots ou consiste en des nanodots.

12. Polymère marqué selon la revendication 11, **caractérisé en ce que** le polymère marqué peut être préparé par un procédé selon l'une quelconque des revendications 1 à 5.
